# EUROPEAN PATENT SPECIFICATION

(11) **EP 1 997 564 B1**
(45) Date of publication and mention of the grant of the patent: **17.08.2011**
(21) Application number: 08251318.5
(22) Date of filing: 04.04.2008
(51) Int. Cl.: B05D 5/08, B05D 3/02, B32B 3/24, C09D 127/12, B28C 5/38, B32B 13/04, C04B 28/00, C04B 28/02, C04B 38/10, E04B 1/86

(54) **Processes for repairing erosion resistant coatings**
Verfahren zur Reparatur von erosionsbeständigen Beschichtungen
Procédés pour la réparation de revêtements résistants à l'érosion

(30) Priority: 05.04.2007 US 784573
(43) Date of publication of application: 03.12.2008
(73) Proprietor: United Technologies Corporation, Hartford, CT 06101 (US)
(72) Inventor: Bogue, William, Hebron, CT 06248 (US); Hertel, Christopher J., Wethersfield, Ct 06109 (US); Holland, Brian K., Lansing,MI 48911 (US)
(74) Representative: Leckey, David Herbert

(56) References cited:
- EP-A- 1 312 655
- AU-A- 3 338 801
- US-A1- 2003 134 956
- US-B1- 6 443 258

## Description

### FIELD OF THE INVENTION

The invention relates to erosion resistant coatings applied to acoustic fairings and, more particularly, relates to repairing of these erosion resistant coatings.

### BACKGROUND OF THE INVENTION

Acoustic liners in the nacelle & fan frame section of the gas turbine engines may be fabricated with or without a linear absorbing facing such as wire mesh. The Percent Open Area (POA) parameter is established by the acoustic attenuation requirement of the liner. However, this POA may be accomplished by many small holes, that is, perforations, or fewer large holes. The maximum diameter of the perforation is another important parameter for liners without wire mesh, so these liners typically have perforations having diameters of approximately 0.050 inches (1.27 mm) arrayed in a compact pattern. Another benefit of the wire mesh is that it provides erosion protection to the underlying composite. In particular, perforated fiberglass laminate face sheets with perforations require erosion protection. One method of providing this protection is applying a polyvinylfluoride (PVF) film, commercially available as Tedlar^{®}, commercially available from E.I. du Pont de Nemours & Co., Wilmington, Delaware, that is bonded and comolded with the laminate face sheet. This allows the small perforations of approximately 0.047 inches (1.19 mm) in diameter to be formed through both the laminate face sheet and the PVF film by arrangement of pins during the fabrication of the laminate face sheet. The pins are filleted to the mold to allow demolding. This arrangement of pins also tucks the free edge of the PVF film over the molded radius of and into the perforations, keeping the edge of the film away from the peel threat of the air stream within the fan frame section.

One of ordinary skill in the art recognizes PVF films have very limited repairability. The PVF film is available in an as-cast/film format and requires surface treatment to permit the film to be reliably bonded to epoxy composites during the original molding process. A local patch could be attempted, but the perforations would have to be hot formed concurrent with the bonding which is a process prone to processing errors. For substantial repairs, the entire erosion coating of the laminate face sheet, rather than only an eroded area(s), must be restored to protect the structural fiberglass from erodents ingested by the engine.

Presently, due to this very limited repairability of the PVF film, the acoustic liners are being scrapped rather than making efforts to replace the damaged and/or eroded laminate face sheets and restore the entire acoustic liner.

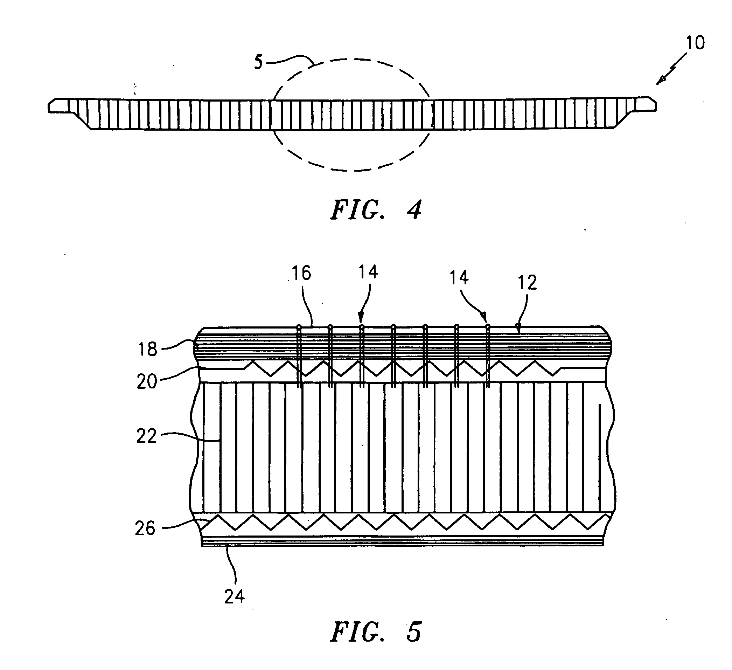

Alternatives to PVC coated acoustic liners exist such as acoustic liners equipped with protective coatings. For example, U.S. Patent No. 6,206,136 to Swindlehurst et al. discloses an acoustic liner fabricated with a protective coating disposed upon a linear absorbing facing, i.e., a facesheet, such as a composite sheet or wire mesh. Swindlehurst discloses the facesheet is provided with a plurality of perforations that are sized and numbered such that the facesheet has a predetermined open area ratio. In FIG. 4, Swindlehurst illustrates the acoustic tuning capability of the acoustic liners taught therein. The graph of Swindlehurst plots the pressure drop across the liner against the mean flow velocity through the perforations. Based upon this data and the coating thicknesses disclosed, one of ordinary skill in the art can determine the size of the perforations of the Swindlehurst liners are at least 0.10 inches (2.54 mm) in diameter. The perforated acoustic liners taught by Swindlehurst are recognized by one of ordinary skill in the art as being "large-sized" perforations. The large-sized perforated acoustic liner and its method of manufacture taught by Swindlehurst may be useful in certain applications, but cannot be broadly applied to all acoustic liner applications due to process limitations associated with applying protective coatings to acoustic liners having perforations with diameters smaller than 0.10 inches (2.54 mm).

Therefore, there exists a need for an erosion repair coating and process(es) for applying said coatings in order to extend the useful service life of acoustic liners and other present and future engine parts with perforations having similar PVF films which serve to impart erosion resistance.

A process having the features of the preamble of claim 1 is disclosed in EP-A-1312655.

### SUMMARY OF THE INVENTION

From one aspect of the present invention, there is provided a process for applying erosion resistant coatings, as claimed in claim 1.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a photograph of an acoustic liner having a perforated surface and an exemplary erosion resistant coating described herein disposed thereupon in accordance with the exemplary process(es) described herein;
FIG. 2 is a photograph of a mid acoustic panel having a perforated surface and an exemplary erosion resistant coating described herein disposed thereupon in accordance with the exemplary process(es);
FIG. 3 is a photograph of an expanded view of a perforation of the acoustic liner of FIG. 1;
FIG. 4 is a representation of an article having a perforated surface and an exemplary erosion resistant
FIG. 5 is an expanded view of area A of FIG. 4; and
FIG. 6 is a flowchart illustrating the exemplary process(es) described herein.

Like reference numbers and designations in the various drawings indicate like elements.

### DETAILED DESCRIPTION

For purposes of illustration, the processes of applying the erosion resistant coating and the coating itself may be described with respect to its application upon an acoustic liner. However, any turbine engine component, and even any type of part, having a perforated surface typically coated with PVF film may derive benefits pertaining to the use of the erosion resistant coating of the present invention.

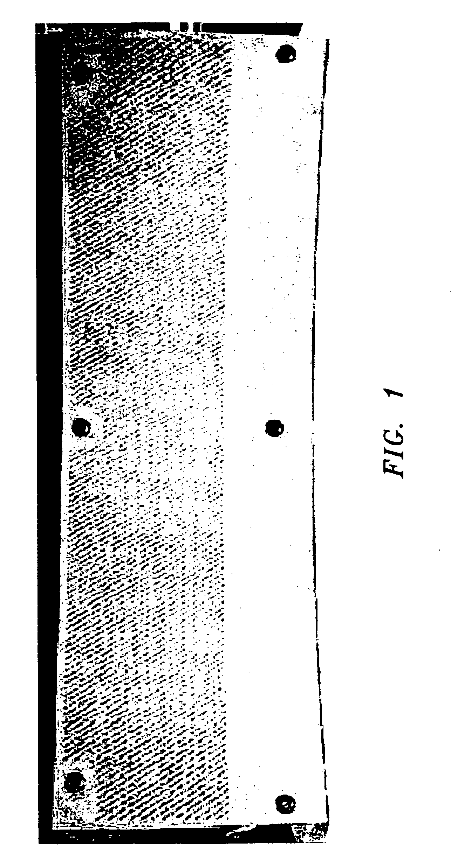

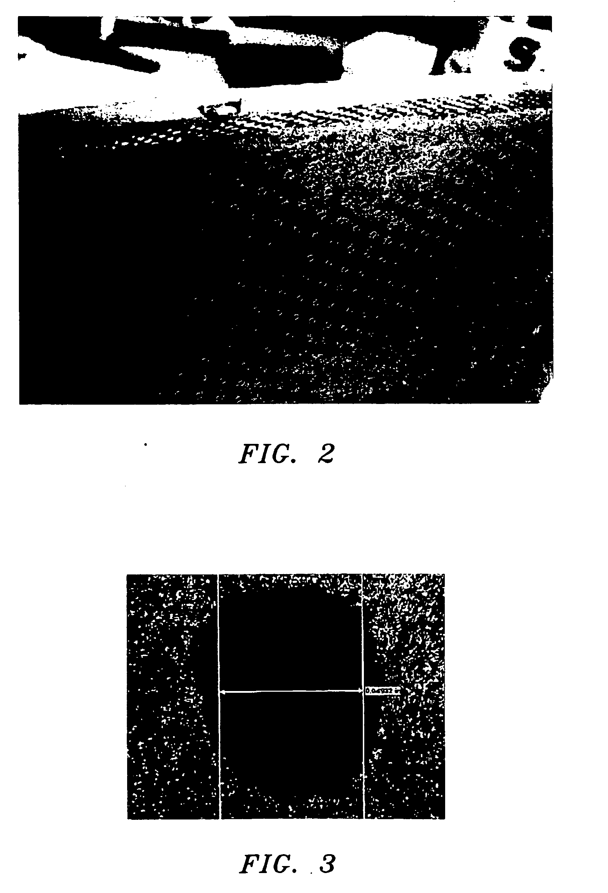

Referring now to the photographs of FIGS. 1-3, a mid acoustic panel for an outer bypass of a CFM turbine engine is shown. FIG. 2 is a photograph of an expanded view of the perforated surface of the mid acoustic panel. FIG. 3 is a photograph of an expanded view of a single perforation of the mid acoustic panel, which indicates the pre-coated diameter of the perforation is 0.04932 inches (1.253 mm).

Referring now to FIGS. 4 and 5, an article 10 may have a first exterior surface 12 having a plurality of perforations 14, that is, apertures, and a fluoroelastomer based coating 16 disposed thereupon. The fluoroelastomer based coating 16 may be disposed upon the surface 12 and at least partially within each of the perforations 14 such that the coating coats the flow path in an amount sufficient to protect the perforation from wind shear. The article may be composed of a laminate sheet material 18 such as fiberglass, carbon fiber, combinations thereof, and the like, or aluminum, aluminum-based alloy, combinations thereof, and the like. The laminate sheet material may be bonded with a first adhesive material layer 20 to a core material 22. The core material 22 may also have bonded on the opposing side a second piece of laminate sheet material 24 by a second adhesive material layer 26. Suitable core and adhesive materials for use herein are known to one of ordinary skill in the art.

Each perforation may have a pre-coating diameter measuring no less than about 0.025 inches (0.635 mm) and no greater than about 0.075 inches (1.905 mm). As the pre-coated diameter of the perforations approaches approximately 0.1 inches (2.54 mm), the perforations become characterized as being large-sized perforations. Although the exemplary process(es) described herein may be implemented when large perforations are present, the exemplary process(es) are designed to overcome the obstacles associated with coating parts having perforations less than approximately 0.1 inches (2.54 mm) in pre-coated diameter. Likewise, the thickness of the part is also related to the size of the pre-coated diameter of the perforations. As the thickness of the part increases, the pre-coated diameter of the perforations also increases. When coated, the pre-coated diameter of a perforation reduces in size by about 20 percent. Perforations having a pre-coating diameter of less than 0.025 inches (0.635 mm) may be increasingly likely to experience a blockage after being coated. Generally, the thickness of the fluoroelastomer based coating is directly proportional to the reduction in the diameter of the pre-coating perforation to the diameter of the post-coating perforation. For example, when the article being coated is an acoustic liner, the coated perforations must remain open in order to provide an acoustic flowpath surface.

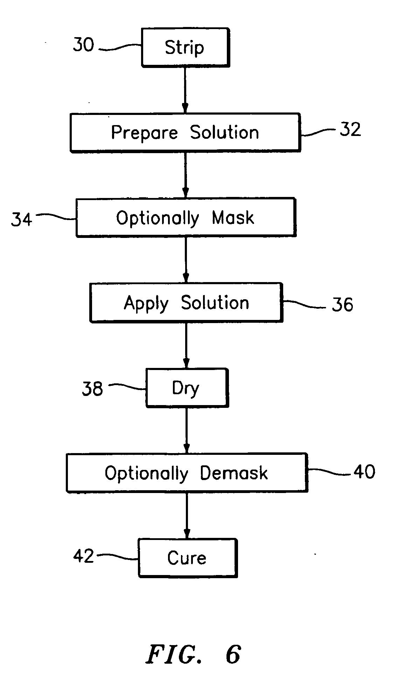

Referring now to FIG. 6, a flowchart representative of the exemplary processes described herein is shown. The surface of the article having the perforated surface(s) may be stripped and cleaned to remove the existing, damaged film at step 30 of FIG. 6. Any one of a number of mechanical stripping processes as known to one of ordinary skill in the art may be used. Suitable mechanical stripping processes may include peeling, scraping, grit blasting, combinations thereof, and the like.

A fluoroelastomer based solution may be prepared by mixing at least one fluoroelastomer with at least one solvent at step 32 of FIG. 6. As is known to one of ordinary skill in the art, fluid fluoroelastomers for use in solutions described herein are sold commercially as a fluid fluoroelastomer in a solvent. For example, an uncured fluorocarbon monomer such as Viton^{®}, commercially available from E.I. du Pont de Nemours & Co., of Wilmington, Delaware, is typically packaged and sold in a ketone-based solvent such as acetone, methylethylketone (MEK), and the like. In another example, an unreactive fluoroelastomer coating such as Pelseal^{®}, commercially available from Pelseal Technologies LLC, of Newtown, Pennsylvania, is also typically packaged and sold in the aforementioned ketone-based solvents. The fluoroelastomer concentration of Viton^{®} is typically 30% solids by weight of the solution with the remainder comprising the solvent. During preparation, the fluid fluoroelastomer and ketone solvent mixture may be added to a larger amount of the same solvent, thus cutting the solids concentration of the fluoroelastomer from 30% solids by weight to a range of about 5% solids by weight to 8% solids by weight to 9% solids by weight of the fluoroelastomer with the remainder comprising the ketone-based solvent. A solids by weight concentration of less than 5% produces a fluid mixture having a runny, soupy consistency that is unsuitable for use herein as a coating composition. In contrast, a solids by weight concentration of greater than 10% produces a fluid mixture having a sticky and tacky consistency, like Silly String^{®}, which is unsuitable for use herein as a coating composition. Generally, the thickness of the fluoroelastomer based coating is directly proportional to the amount of solids in the fluoroelastomer based solution. As a result, it has been observed that an increase in the fluoroelastomer concentration may affect the overall quality of the surface finish of the erosion resistant coating.

If necessary, a masking agent may be applied to a portion of the article's surface which is intended to remain uncoated. The article may be optionally masked at step 34 of FIG. 6. Suitable masking techniques and masking agents that are compatible with the aforementioned laminate sheet material and fluoroelastomer based solution may be utilized as known to one of ordinary skill in the art.

Whether masked or not, the fluoroelastomer based solution may be applied to at least a portion of the perforated surface of the article at step 36 of FIG. 6. The fluoroelastomer based solution may be applied to the perforated article using any one of a number of spraying techniques known to one of ordinary skill in the art. For example, the fluoroelastomer based solution may be applied using an air gun such as a High Volume Low Pressure (HVLP) Air Gun model no. FLG-626-322 commercially available from DeVilbiss, of Glendale Heights, Illinois. In addition, other HVLP air guns may be utilized. For example, a Wagner^{®} paint gun commercially available at Home Depot^{®}, Lowes^{®}, and other home product stores, may be employed. When employing an air gun exhibiting a lower quality delivery of the fluoroelastomer based solution, the fluoroelastomer based solution may require a greater fluoroelastomer concentration such as up to about 15% solids by weight of the solution without compromising the quality of the surface finish of the erosion resistant coating. The fluoroelastomer based solution may first be loaded into a container of the air gun. A compressed air stream may then be generated which creates a vacuum within the air gun and draws a quantity of the fluoroelastomer based material into the compressed air stream. The compressed air stream may be fed through the air gun at a rate of about 12 pounds per square inch (83 kPa) to about 28 pounds per square inch (193 kPa). The fluoroelastomer based material may then travel through the air gun and spray out an air gun nozzle upon the article's perforated surface.

After applying the fluoroelastomer based solution, the coated article may be dried at room temperature for a period of time of about 2 minutes to about 5 minutes at step 38 of FIG. 6. The coated article may be dried in a humidity controlled atmosphere. In humid environments, certain fluoroelastomers begin bubbling and the fluoroelastomer based coating may exhibit bubbling after application to the article's perforated surface which may ruin the erosion resistant coating. After drying the coated article, the mask, if applied, may be removed at step 40 of FIG. 6 using technique(s) known to one of ordinary skill in the art.

Once dried, the coated article may be cured at step 42 of FIG. 6 using any one of a number of curing techniques known to one of ordinary skill in the art. For example, the coated article may be cured by heating the coated article in a conventional oven at a temperature of about 140°F (60°C) to about 180°F (80°C) for a period of time of about 10 minutes to about 20 minutes, or at a temperature of about 160°F (70°C) for a period of time of about 15 minutes.

The resultant erosion resistant coating is formed upon at least a portion of the perforated surface and at least partially upon the interior surfaces within each of the perforations. The erosion resistant coating may coat the exterior surface surrounding each perforation and the edge of each perforation until at least partially covering the interior surfaces of each perforation without coating the entire interior surface or coating through the perforation.

The erosion resistant coating and process(es) for applying the coating of the present invention are advantageous over the prior art. The process and coating described herein can prolong the useful service life of acoustic liners, mid acoustic panels, turbine engine components, and the like, by restoring the erosion resistant coatings of acoustic liners and other present and future engine parts, previously equipped with PVF films of the prior art. For example, the fan frame section of a CFM56-5B engine houses six acoustic liners of the prior art, each liner costing $2,000.00, or more. Without the erosion resistant coating of the present invention, each prior art acoustic liner must be replaced when the PVF film begins exhibiting wear even though the liner may still be structurally sound. If the acoustic liner had the erosion resistant coating of the present invention, the coating may be reapplied to the acoustic liner using the process(es) described herein rather than prematurely replacing the part.

The erosion resistant coating of the present invention may be disposed at least partially within the perforations to prevent peeling. During use, the coating is exposed to hot airstreams passing over the acoustic liners. The velocity and heat generated by the airstreams slowly dislodge and lift the coating from the surface. As a result, the coating begins peeling away and exposing the acoustic liner surface to the hot airstreams and foreign objects such as particulates. The erosion resistant coating described herein prevents peeling from occurring due to the coating being tucked into the perforations by virtue of the coating being at least partially disposed along the interior surfaces of each perforation.

One or more embodiments of the present invention have been described. Nevertheless, it will be understood that various modifications may be made without departing from the scope of the invention. Accordingly, other embodiments are within the scope of the following claims.

## Claims

1. A process for applying erosion resistant coatings, comprising:
applying (36) a fluoroelastomer based solution to at least a portion of at least one perforated surface of a gas turbine acoustic panel, said at least one perforated surface comprises a plurality of perforations;
drying (38) said at least one perforated surface coated with said fluoroelastomer based solution; and
curing (42) said at least one perforated surface coated with said fluoroelastomer based solution to form an erosion resistant coating; wherein:
each of said perforations has a pre-coating diameter of no less than (0.635 mm) 0.025 inches and no greater than (1.905 mm) 0.075 inches and
said fluoroelastomer based solution comprises 8% solids by weight of said solution to 9% solids by weight of said solution of at least one fluoroelastomer.

2. The process of claim 1, wherein said fluoroelastomer based solution comprises at least one fluoroelastomer and a ketone based solvent.

3. The process of claim 2, wherein said fluoroelastomer is a fluorocarbon and said ketone based solvent comprise acetone or methylethylketone.

4. The process of any preceding claim, wherein applying (36) further comprises spraying said fluoroelastomer based solution using an air gun.

5. The process of any of claims 1 to 4, wherein applying (36) further comprises the steps of;
feeding a compressed air stream through a nozzle of an air gun;
drawing a quantity of said fluoroelastomer based solution into said compressed air stream; and
spraying said fluoroelastomer based solution.

6. The process of claim 5, wherein feeding comprises feeding said compressed air stream at a rate of 83 kPa (12 pounds per square inch) to 193 kPa (28 pounds per square inch)

7. The process of any preceding claim, further comprising masking (34) a portion of a surface of said article prior to applying (36) said fluoroelastomer based solution.

8. The process of any preceding claim, wherein curing comprises heat treating said perforated surface coated with said fluoroelastomer based solution at a temperature of 60°C (140°F) to 80°C (180°F) for a period of time of 10 minutes to 20 minutes.

9. The process of any preceding claim, further comprising drying said at least one perforated surface coated with said fluoroelastomer based solution at room temperature for a period of time of 2 minutes to 5 minutes.

## Patentansprüche

1. Verfahren zum Auftragen von erosionsbeständigen Beschichtungen, aufweisend:
Auftragen (36) einer auf einem Fluorelastomer basierenden Lösung auf mindestens einen Bereich mindestens einer perforierten Oberfläche einer Gasturbinen-Schalldämmungsplatte, wobei die mindestens eine perforierte Oberfläche eine Mehrzahl von Perforationen aufweist;
Trocknen (18) der mindestens einen perforierten Oberfläche, die mit der auf einem Fluorelastomer basierenden Lösung beschichtet ist; und
Härten (42) der mindestens einen perforierten Oberfläche, die mit der auf einem Fluorelastomer basierenden Lösung beschichtet ist, um eine erosionsbeständige Beschichtung zu bilden; wobei:
jede der Perforationen einen Durchmesser vor dem Beschichten von nicht weniger als 0,635 mm (0,025 Inch) und nicht größer als 1,905 mm (0,075 Inch) hat; und
die auf einem Fluorelastomer basierende Lösung 8% Festkörper pro Gewicht der Lösung bis 9% Festkörper pro Gewicht der Lösung an mindestens einem Fluorelastomer aufweist.

2. Verfahren nach Anspruch 1, bei dem die auf einem Fluorelastomer basierende Lösung mindestens ein Fluorelastomer und ein Lösungsmittel auf Ketonbasis aufweist.

3. Verfahren nach Anspruch 2, bei dem das Fluorelastomer ein Fluorkohlenstoff ist und das Lösungsmittel auf Ketonbasis Aceton oder Methylethylketon aufweist.

4. Verfahren nach einem vorangehenden Anspruch, bei dem das Auftragen (36) außerdem ein Spritzen der auf einem Fluorelastomer basierenden Lösung unter Verwendung einer Spritzpistole aufweist.

5. Verfahren nach einem der Ansprüche 1 bis 4, bei dem das Auftragen (36) außerdem folgende Schritte aufweist:
Zuführen eines Druckluftstroms durch eine Düse einer Spritzpistole;
Ziehen einer Menge der auf einem Flurelastomer basierenden Lösung in den Druckluftstrom; und
Spritzen der auf einem Fluorelastomer basierenden Lösung.

6. Verfahren nach Anspruch 5, bei dem das Zuführen ein Zuführen des Druckluftstroms mit einer Rate von 83 kPa (12 Pound pro Quadratinch) bis 193 kPa (28 Pound pro Quadratinch) aufweist.

7. Verfahren nach einem vorangehenden Anspruch, außerdem aufweisend ein Maskieren (34) eines Bereichs einer Oberfläche des Gegenstands vor dem Auftragen (36) der auf einem Fluorelastomer basierenden Lösung.

8. Verfahren nach einem vorangehenden Anspruch, bei dem das Aushärten ein Wärmebehandeln der perforierten, mit der auf einem Fluorelastomer basierenden Lösung beschichteten Oberfläche bei einer Temperatur von 60°C (140°F) bis 80°C (180°F) für eine Zeitdauer von 10 Minuten bis 20 Minuten aufweist.

9. Verfahren nach einem vorangehenden Anspruch, außerdem aufweisend ein Trocknen der mindestens einen perforierten, mit der auf einem Fluorelastomer basierenden Lösung beschichteten Oberfläche bei Raumtemperatur für eine Zeitdauer von 2 Minuten bis 5 Minuten.

## Revendications

1. Procédé d'application de revêtements résistants à l'érosion, comprenant :
l'application (36) d'une solution à base de fluoroélastomère sur au moins une partie d'au moins une surface perforée d'un panneau acoustique de turbine à gaz, ladite au moins une surface perforée comprenant une pluralité de perforations ;
le séchage (38) de ladite au moins une surface perforée revêtue de ladite solution à base de fluoroélastomère ; et
la cuisson (42) de ladite au moins une surface perforée revêtue de ladite solution à base de fluoroélastomère pour former un revêtement résistant à l'érosion ; dans lequel :
chacune desdites perforations a un diamètre avant le revêtement qui n'est pas inférieur à 0,635 mm (0,025 pouce) et qui n'est pas supérieur à 1,905 mm (0,075 pouce) ; et
ladite solution à base de fluoroélastomère comprend de 8 % de solides relativement au poids de ladite solution à 9 % de solides relativement au poids de ladite solution d'au moins un fluoroélastomère.

2. Procédé selon la revendication 1, dans lequel ladite solution à base de fluoroélastomère comprend au moins un fluoroélastomère et un solvant à base de cétone.

3. Procédé selon la revendication 2, dans lequel ledit fluoroélastomère est un fluorocarbure et ledit solvant à base de cétone comprend de l'acétone ou de la méthyléthylcétone.

4. Procédé selon l'une quelconque des revendications précédentes, dans lequel l'application (36) comprend en outre la pulvérisation de ladite solution à base de fluoroélastomère en utilisant un pistolet à air.

5. Procédé selon l'une quelconque des revendications 1 à 4, dans lequel l'application (36) comprend en outre les étapes qui consistent à :
introduire un flux d'air comprimé via une buse d'un pistolet à air ;
introduire par aspiration une quantité de ladite solution à base de fluoroélastomère dans ledit flux d'air comprimé ; et
pulvériser ladite solution à base de fluoroélastomère.

6. Procédé selon la revendication 5, dans lequel l'introduction comprend l'introduction dudit flux d'air comprimé à une pression de 83 kPa (12 livres par pouce carré) à 193 kPa (28 livres par pouce carré).

7. Procédé selon l'une quelconque des revendications précédentes, comprenant en outre le masquage (34) d'une partie d'une surface dudit article avant l'application (36) de ladite solution à base de fluoroélastomère.

8. Procédé selon l'une quelconque des revendications précédentes, dans lequel la cuisson comprend le traitement par la chaleur de ladite surface perforée revêtue de ladite solution à base de fluoroélastomère à une température de 60°C (140 °F) à 80°C (180 °F) pendant une période de temps de 10 minutes à 20 minutes.

9. Procédé selon l'une quelconque des revendications précédentes, comprenant en outre le séchage de ladite au moins une surface perforée revêtue de ladite solution à base de fluoroélastomère à la température ambiante pendant une période de temps de 2 minutes à 5 minutes.
